# EUROPÄISCHE PATENTSCHRIFT

(11) **EP 1 184 756 B1**
(45) Veröffentlichungstag und Bekanntmachung des Hinweises auf die Patenterteilung: **21.03.2007**
(21) Anmeldenummer: 01119264.8
(22) Anmeldetag: 09.08.2001
(51) Int. Cl.: G05B 19/042

(54) **System und Verfahren zur Strukturierung eines Informationsraums**
System and method for structuring an information space
Système et méthode de structuration d'un espace d'informations

(30) Priorität: 22.08.2000 DE 10041100; 06.06.2001 DE 10127431
(43) Veröffentlichungstag der Anmeldung: 06.03.2002
(73) Patentinhaber: SIEMENS AKTIENGESELLSCHAFT, 80333 München (DE)
(72) Erfinder: Hamadou, Mehdi, 91052 Erlangen (DE); Jahn, Dirk, 52072 Aachen (DE); Kiesel, Bruno, 91058 Erlangen (DE)

(56) Entgegenhaltungen:
- US-A- 5 644 487

## Beschreibung

Die Erfindung betrifft ein System und ein Verfahren zur Strukturierung eines Informationsraums.

Ein derartiges System und Verfahren kommt beispielsweise im Bereich der Automatisierungstechnik, bei Produktions- und Werkzeugmaschinen, bei Diagnose-/Serviceunterstützungssystemen sowie für komplexe Komponenten, Geräte und Systeme, wie beispielsweise Fahrzeuge und industrielle Maschinen und Anlagen zum Einsatz. Ein besonders vorteilhafte Anwendung besteht im Zusammenhang mit AR (Augmented Reality = erweiterte Realität), einer neuen Form der Mensch-Technik-Interaktion, bei der dem Anwender Informationen in sein Sichtfeld eingeblendet werden - beispielweise über eine Datenbrille. Die Einblendung geschieht jedoch kontextabhängig, d. h. passend und abgeleitet vom betrachteten Objekt, z. B. einem Bauteil. So wird das reale Sichtfeld beispielweise eines Monteurs durch eingeblendete Montagehinweise um für ihn wichtige Informationen erweitert. In diesem Falle kann Augmented Reality unter anderem das herkömmliche Montagehandbuch ersetzen.

Aus US-Patent 5,644,487 ist es bekannt, dass man mittels einer SFC-Mode-Kontrolle (SFC: Sequentifal Function Chart) ein durch die SFC dargestellter Prozess steuern kann. Die SFC wird infolge einer Wahl der Mode-Kontrolle entsprechend geändert und neben ihr dargestellt. Dadurch kann man die Evolution oder irgendeine Schritt der SFC direkt arretieren, starten, aktivieren oder deaktivieren. Hierbei ist ein Ablaufdiagramm, um die Programmabläufe oder die Funktionsweise eines Systems zu veranschaulichen. Ein Hierarchiebaum wird in diesem Fall nur zur Erstellung oder Programmierung eines Kontrollesystems aufgebaut, wobei die Knoten des Baums von den physikalischen Anlagen und den Prozessverläufen gebildet werden. Ein solcher Baum bedient nicht zur Strukturierung eines Informationsraums.

Der Erfindung liegt die Aufgabe zugrunde, in elektronischer Form zu einem Produkt vorliegende Informationen unterschiedlichster Art in einer einheitlichen, einfachen Art und Weise verfügbar zu machen.

Diese Aufgabe wird gelöst durch ein System zur Strukturierung eines Informationsraums eines Produkts, wobei der Informationsraum dynamische Daten und statische Daten enthält, mit einem Produktmodell in Form einer hierarchischen Baumstruktur zur Beschreibung des Informationsraums, wobei das Produktmodell Knoten und Verbindungen der Knoten enthält, wobei der Knoten als Abbild einer Komponente des Produkts vorgesehen ist und wobei die Verbindung als Abbild eines Zusammenhangs der durch die Verbindung verbundenen Knoten vorgesehen ist.

Diese Aufgabe wird gelöst durch ein Verfahren zur Strukturierung eines Informationsraums eines Produkts, der dynamische Daten und statische Daten enthält, bei welchem Verfahren mit einem Produktmodell in Form einer hierarchischen Baumstruktur der Informationsraum beschrieben wird, wobei das Produktmodell Knoten und Verbindungen der Knoten enthält, wobei der Knoten eine Komponente des Produkts abbildet und wobei die Verbindung einen Zusammenhang der durch die Verbindung verbundenen Knoten abbildet.

Die Knoten des Produktmodells lassen sich besonders einfach und eindeutig durch Pfade identifizieren, wenn sich die Pfade aus den Namen aller Komponenten von der Wurzel der hierarchischen Baumstruktur bis zum Knoten selbst zusammensetzen. Den Knoten können für die Strukturierung nicht nötige Informationen zugeordnet werden, sogenannte Metainformationen, die z. B. eine Beschreibung des Knoteninhaltes, Stichwörter und/oder Ansprechpartner enthalten. Es wird vorgeschlagen, das Produktmodell in einem internet-konformen Format zu beschreiben, z. B. in einem XML-Dialekt, wobei die Metainformationen mit dem XML Ressource Description Format (RDF) definiert werden und die Verbindungen zwischen den Knoten mit den XML-Dialekten XPointer und XLink beschrieben werden können.

Die Inhalte der Knoten bzw. die Knoten des Produktmodells werden vorteilhaft mittels Adaptern mit dynamischen Daten einer Automatisierungseinrichtung und/oder mit Daten von Legacy-Systemen, wie Betriebsdatenerfassungssystemen oder Produktdatenmanagementsystemen, verbunden. Mit Hilfe einer Bereitstellungskomponente, genannt Infobroker, werden die dynamischen und statischen Informationen bereitgestellt, wobei Suchregeln für die Durchführung der Bereitstellung vorgesehen sind, wobei Erfassungsmittel zur Erfassung einer Arbeitssituation vorgesehen sind und wobei die Bereitstellung in Abhängigkeit der erfassten Arbeitssituation und in Abhängigkeit der Metainformationen vorgesehen ist. Die durch den Infobroker bereitgestellten Informationen werden mit Visualisierungsmitteln visualisiert, wobei eine Bereitstellung der Informationen in internet-konformen Formaten vorgesehen ist.

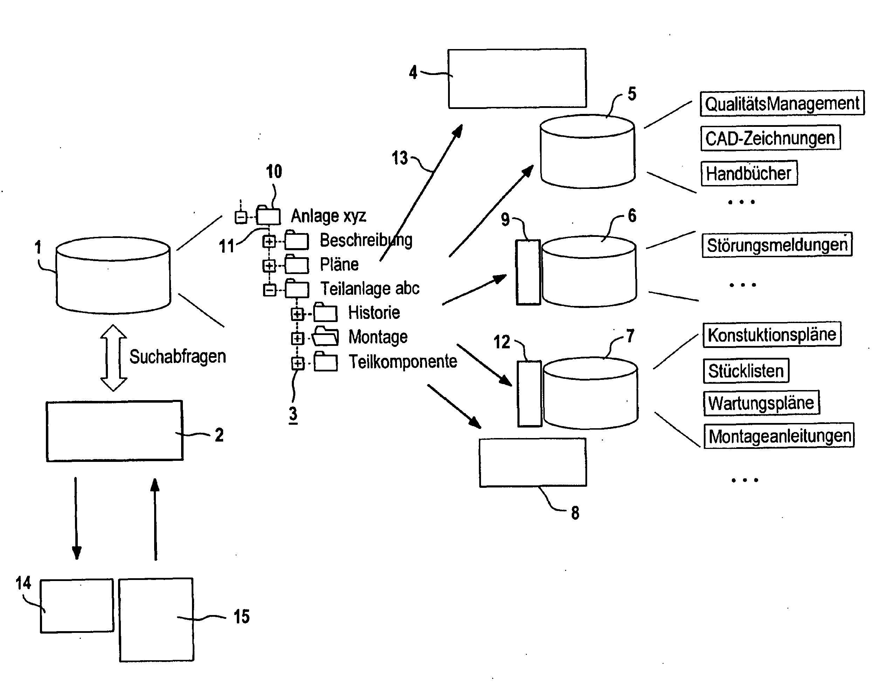

Im Folgenden wird die Erfindung anhand des in der Figur dargestellten Ausführungsbeispiels näher beschrieben und erläutert. Die Figur zeigt ein prinzipielles Blockschaltbild zum Systemaufbau und stellt den Zusammenhang zwischen einem Produktmodell und einem Infobroker dar.

Die im Folgenden beschriebene Erfindung versteht sich insbesondere im speziellen Kontext der Anwendungsfelder "Produktions- und Werkzeugmaschinen" (NC-gesteuerte, automatisierungstechnische Prozesse) sowie "Diagnose-/Serviceunterstützungssysteme für komplexe technische Anlagen/Geräte/Systeme" (z. B. Fahrzeuge, aber auch industrielle Maschinen und Anlagen).

Folgendes technische Problem liegt der Erfindung zugrunde: Die Komplexität und Vielfalt der Anlagen/Geräte/Systeme (im folgendem "Produkt"), die ein Facharbeiter meistern muss, wird immer größer. Dieser benötigt in allen Phasen des Lebenszyklus eines Produktes, wie Produktion, Inbetriebsetzung, Wartung und Entsorgung, eine Unterstützung durch umfangreichen Dokumentation wie Handbücher, Montage- und Wartungsanleitungen und technische Zeichnungen. Diese Dokumentation liegt heute meistens in Papierform vor. Sie wird jedoch zunehmend elektronisch angeboten. Diese Art von Dokumentation wird statische Daten 5 genannt. Technische Anlagen werden von Automatisierungseinrichtungen gesteuert. Diese geben den Zustand in Form von Prozesswerten, genannt dynamische Daten 4, wieder. Zu dieser Klasse Daten gehören auch alle unternehmenskritische Daten, die in separaten Systemen (Legacy-Systeme) verwaltet werden. All diese Systeme erfordern eine Schulung des Facharbeiters oder sie werden von seinen Vorgesetzten bedient.

Die Hürde, die ein Facharbeiter bei einem Einsatz meistern muss, ist in der Vielfalt der Dokumente die richtigen Informationen zu finden. Dabei unterliegt die Wahl der Kombination von statischen Daten 5 und dynamischen Daten 4 dem Erfahrungswissen des Facharbeiter. In der nahen Zukunft wird diese Dokumentation zentral auf einem sogenannten Server verwaltet, so dass der Facharbeiter mit Hilfe der Web-Techniken von seinem Einsatzort aus transparent darauf zugreifen kann. Der Server ist somit eine elektronische Dokumentenablage erweitert um eine Webserver-Funktionalität.

Bei bisherigen Lösungen sucht der Facharbeiter im voraus die Dokumentation, die er am Einsatzort nach seinem Erfahrungswissen vermutlich benötigen wird. Dabei kann es vorkommen, dass Dokumente fehlen bzw. veraltet oder fehlerhaft sind und er deswegen den Einsatz abbrechen und ein zweites Mal wiederkommen muss. Der Zugriff auf die dynamischen Daten 4, wie Prozesswerte, muss mit separaten Einrichtungen geschehen. Dies gilt genauso für die unternehmenskritischen Daten.

Die vorgeschlagene Lösung basiert auf einer Strukturierung des Informationsraumes:
Sowohl die dynamischen Daten 4 als auch die statischen Daten 5 werden durch ein Produktmodell 1 in Form einer hierarchischen Baumstruktur 3 beschrieben. Das Produktmodell 1 repräsentiert somit den kompletten Informationsraum eines Produktes. Die Knoten 10 der Baumstruktur 3 bilden eine Komponente des Produktes ab. An diesen Knoten 10 hängen wiederum alle dazugehörigen Teilkomponenten. Die hierarchische Baumstruktur 3 entspricht dem mechanischen, elektrischen, hydraulischen oder Software-technischen Aufbau eines Produktes.

Die Knoten 10 sind, falls sie in Zusammenhang stehen, über Verbindungen 11 miteinander verbunden. Der einen Sensor als mechanische Komponente abbildende Knoten 10 ist beispielsweise mit dem Knoten 10 verbunden (verlinkt), der den Sensor als elektrische Komponente abbildet.

Jeder Knoten 10 wird mit zusätzlichen Informationen, genannt Metainformationen, angereichert. Diese können eine Beschreibung des Inhaltes, Stichwörter, Ansprechpartner, usw. sein.

Ein Knoten 10 im Produktmodell 1 ist mit einem Pfad eindeutig identifizierbar. Der Pfad setzt sich aus den Namen aller in den jeweiligen Knoten abgebildeten Komponenten, von der Wurzel der hierarchischen Baumstruktur 3 bis zum Knoten 10 selbst, zusammen. Ein solcher Pfad wird Universal Ressource Identifier (URI) genannt.

Das Produktmodell 1 kann in einem XML-Dialekt beschrieben werden. Die Metainformationen können mit dem XML Ressource Description Format (RDF) definiert werden. Für die Verbindungen 11 zwischen den Knoten 10 können die XML-Dialekte XPointer und XLink zum Einsatz kommen.

Dynamische Daten 4 können über die Knoten 10 des Produktmodells 1 angesprochen werden. Der Inhalt eines solchen Knoten 10 verbindet sich über einen Adapter 13 (genannt Bridge) mit der Automatisierungseinrichtung. Damit stehen die statischen Daten 5 mit den dynamischen Daten 4 im Zusammenhang, was eine Suche bzw. Verwendung einer separaten DV-Einrichtung vereinfacht bzw. überflüssig macht.

Das Bridge-Konzept erlaubt das Einbinden von beliebigen Legacy-Systemen, wie Betriebsdatenerfassungssysteme 6 (BDE) oder Produktdatenmanagementsysteme 7 (PDM), als Datenlieferanten im Informationsraum. Die heterogene EDV-Landschaft eines Unternehmens wird durch das Produktmodell 1 nahtlos und transparent eingebunden. Die Produktstruktur 1 fungiert als eine "Mapping"-Struktur zu den heterogenen Systemen.

Eine Bereitstellungskomponente 2, genannt Infobroker, stellt die Informationen zusammen, so dass der Facharbeiter alle notwendigen dynamischen Daten 4 und statischen Daten 5 transparent abrufen kann. Für die Bereitstellung der Daten 4, 5 werden Suchregeln angewendet. Eine solche Regel könnte so formuliert werden: "Wenn zu einer Teilkomponente keine Wartungsanleitung hinterlegt wurde, schaue nach dieser Information in eine in der Hierarchie höhere Komponente". Der Infobroker 2 stützt sich bei der Suche der Informationen auf der einen Seite auf den Kontext und die Arbeitssituation 15 in denen sich der Facharbeiter (z. B. Wartung der Maschine xyz) befindet und auf der anderen Seite auf die Metainformationen der Knoten in der Produktstruktur. Die Suchergebnisse des Infobrokers 2 können in internet-konformen Formaten generiert werden, so dass der Facharbeiter sich diese Informationen mit einfachen Visualisierungsmitteln 14 betrachten kann.

Der Vorteil des vorliegenden Systems und Verfahrens liegt in der neuartigen Kombination von unabhängigen Systemen zu einem homogenen Informationsraum:
- Kombination von statischen Dokumenten 5 und dynamischen Daten 4.
- Erweiterung der Datenquellen um Metainformationen.
- Nutzen der Metainformationen bei der Suche, um den Informationsraum auf die notwendigen Daten zu reduzieren.
- Gezieltes Versorgen des Facharbeiters mit den notwendigen Daten bzw. Dokumenten.
- Transparenter Zugriff auf die Legacy-Systeme 6, 7.
- Generieren der Ergebnisse in einem internet-konformen Format.
- Regelbasierte Algorithmen für das Zusammenstellen von Informationen.
- Weitgehender Verzicht auf die Papierform der Dokumentation zu einem Produkt.
- Vereinfachter Zugriffs auf unternehmenskritische Daten (PDM, BDE).

Die Figur stellt u. a. den Zusammenhang zwischen dem Produktmodell 1 und dem Infobroker 2 dar. Die Ergebnisse zu den Abfragen vom Facharbeiter werden vom Infobroker 2 mit Hilfe von Regeln in HTML-Seiten bereitgestellt.

Das Produktmodell 1 beinhaltet alle statischen Dokumente und die Verbindungen zu den Legacy-Systeme über Adapter 9, 12 (sog. Bridge). Ferner werden Applikationen für Teleconferencing 8 oder für das Lesen der aktuellen oder archivierten (Maschinenhistorie) Prozessdaten angebunden.

Zusammenfassend betrifft die Erfindung somit ein System und ein Verfahren zur Strukturierung eines Informationsraums, bei dem sowohl dynamische Daten 4 als auch statische Daten 5 in einem Produktmodell 1 in Form einer hierarchischen Baumstruktur 3 beschrieben werden, wobei das Produktmodell 1 den kompletten Informationsraum eines Produktes repräsentiert und wobei die Knoten 10 der Struktur eine Komponente des Produktes abbilden und wobei an den Knoten 10 alle dazugehörigen Teilkomponenten hängen, wobei jeder Knoten 10 mit zusätzlichen Informationen, genannt Metainformationen, angereichert wird und jeder Knoten 10 im Produktmodell 1 mit einem Pfad eindeutig identifizierbar ist.

## Patentansprüche

1. System zur Strukturierung eines Informationsraums eines Produkts, wobei der Informationsraum dynamische Daten (4) und statische Daten (5) enthält, mit einem Produktmodell (1) in Form einer hierarchischen Baumstruktur (3) zur Beschreibung des Informationsraums, wobei das Produktmodell (1) Knoten (10) und Verbindungen (11) der Knoten enthält, wobei der Knoten (10) als Abbild einer Komponente des Produkts vorgesehen ist, und wobei die Verbindung (11) als Abbild eines Zusammenhangs der durch die Verbindung (11) verbundenen Knoten (10) vorgesehen ist,
**dadurch gekennzeichnet , dass**
der Knoten (10) Metainformationen, insbesondere eine Beschreibung des Knoteninhaltes, Stichwörter und Ansprechpartner, enthält, wobei im System eine Bereitstellungskomponente (2), genannt Infobroker, zur Bereitstellung der dynamischen (4) und statischen (5) Informationen vorgesehen ist, wobei Suchregeln für die Durchführung der Bereitstellung vorgesehen sind, wobei Erfassungsmittel zur Erfassung einer Arbeitssituation (15) vorgesehen sind und wobei die Bereitstellung in Abhängigkeit der erfassten Arbeitssituation (15) und in Abhängigkeit der Metainformationen vorgesehen ist.

2. System nach Anspruch 1,
**dadurch gekennzeichnet ,**
**dass** Pfade zur eindeutigen Identifizierung des Knotens (10) des Produktmodells (1) vorgesehen sind, wobei sich die Pfade aus den Namen aller Komponenten von der Wurzel der hierarchischen Baumstruktur (3) bis zum Knoten (10) selbst zusammensetzen.

3. System nach einem Anspruch 1 oder 2,
**dadurch gekennzeichnet , dass** ,
**dass** das Produktmodell (1) in einem XML-Dialekt beschrieben ist, die Metainformationen mit dem XML Ressource Description Format (RDF) definiert werden und die Verbindungen (11) zwischen den Knoten (10) mit den XML-Dialekten XPointer und XLink beschrieben werden.

4. System nach einem der vorhergehenden Ansprüche,
**dadurch gekennzeichnet ,**
**dass** erste Adapter (13) zur Verbindung des Inhalts des Knotens (10) mit dynamischen Daten (4) einer Automatisierungseinrichtung vorgesehen sind.

5. System nach einem der vorhergehenden Ansprüche,
**dadurch gekennzeichnet ,**
**dass** zweite Adapter (9, 12) zur Verbindung des Inhalts des Knotens (10) mit Daten von Legacy-Systemen, wie Betriebsdatenerfassungssystemen (6) oder Produktdatenmanagementsystemen (7), vorgesehen sind.

6. System nach einem der vorhergehenden Ansprüche,
**dadurch gekennzeichnet ,**
**dass** Visualisierungsmittel (14) zur Visualisierung der durch den Infobroker bereitgestellten Informationen vorgesehen sind, wobei eine Bereitstellung der Informationen in internet-konformen Formaten vorgesehen ist.

7. Verfahren zur Strukturierung eines Informationsraums eines Produkts, der dynamische Daten (4) und statische Daten (5) enthält, bei welchem Verfahren mit einem Produktmodell (1) in Form einer hierarchischen Baumstruktur (3) der Informationsraum beschrieben wird, wobei das Produktmodell (1) Knoten (10) und Verbindungen (11) der Knoten enthält, wobei der Knoten (10) eine Komponente des Produkts abbildet, und wobei die Verbindung (11) einen Zusammenhang der durch die Verbindung (11) verbundenen Knoten (10) abbildet,
**dadurch gekennzeichnet , dass**
der Knoten (10) Metainformationen, insbesondere eine Beschreibung des Knoteninhaltes, Stichwörter und Ansprechpartner, enthält, wobei im System eine Bereitstellungskomponente (2), genannt Infobroker, zur Bereitstellung der dynamischen (4) und statischen (5) Informationen vorgesehen wird, wobei Suchregeln für die Durchführung der Bereitstellung vorgesehen werden, wobei Erfassungsmittel zur Erfassung einer Arbeitssituation (15) vorgesehen werden und wobei die Bereitstellung in Abhängigkeit der erfassten Arbeitssituation (15) und in Abhängigkeit der Metainformationen vorgesehen wird.

8. Verfahren nach Anspruch 7,
**dadurch gekennzeichnet ,**
**dass** Pfade den Knoten (10) des Produktmodells (1) eindeutig identifizieren, wobei sich die Pfade aus den Namen aller Komponenten von der Wurzel der hierarchischen Baumstruktur (3) bis zum Knoten (10) selbst zusammensetzen.

9. Verfahren nach einem Anspruch 7 oder 8,
**dadurch gekennzeichnet ,**
**dass** das Produktmodell (1) in einem XML-Dialekt beschrieben ist, die Metainformationen mit dem XML Ressource Description Format (RDF) definiert werden und die Verbindungen (11) zwischen den Knoten (10) mit den XML-Dialekten XPointer und XLink beschrieben werden.

10. Verfahren nach einem der Ansprüche 7 bis 9,
**dadurch gekennzeichnet ,**
**dass** erste Adapter (13) den Inhalt des Knotens (10) mit dynamischen Daten (4) einer Automatisierungseinrichtung verbinden.

11. Verfahren nach einem der Ansprüche 7 bis 10,
**dadurch gekennzeichnet ,**
**dass** zweite Adapter (9, 12) den Inhalt des Knotens (10) mit Daten von Legacy-Systemen, wie Betriebsdatenerfassungssystemen (6) oder Produktdatenmanagementsystemen (7), verbinden.

12. Verfahren nach einem der Ansprüche 7 bis 11,
**dadurch gekennzeichnet ,**
**dass** Visualisierungsmittel (14) die durch den Infobroker bereitgestellten Informationen visualisieren und in internet-konformen Formaten bereitstellen.

## Claims

1. System for structuring an information space of a product, with the information containing dynamic data (4) and static data (5), with a product model (1) in the form of a hierarchical tree structure (3) to describe the information space, with the product model (1) containing nodes (10) and node connections (11), with the node (10) being provided as a representation of a component of the product and with the connection (11) being provided as a representation of a link between the nodes (10) connected by the connection (11),
**characterised in that**
the node (10) contains meta-information, in particular a description of the node content, key words and contacts, with a provisioning component (2) being provided in the system, known as the infobroker, to provide the dynamic (4) and static (5) information, with search rules being provided to implement provisioning, with acquisition means being provided to record a work situation (15) and with provisioning being provided as a function of the recorded work situation (15) and as a function of the meta-information.

2. System according to claim 1,
**characterised in that**
paths are provided for the unique identification of the node (10) of the product model (1), with the paths being made up of the names of all components from the root of the hierarchical tree structure (3) to the node (10) itself.

3. System according to claim 1 or 2,
**characterised in that**
the product model (1) is described in an XML dialect, the meta-information is defined using the XML resource description format (RDF) and the connections (11) between the nodes (10) are described using the XML dialects XPointer and XLink.

4. System according to one of the preceding claims,
**characterised in that**
first adapters (13) are provided to connect the content of the node (10) to dynamic data (4) of an automation facility.

5. System according to one of the preceding claims,
**characterised in that**
second adapters (9, 12) are provided to connect the content of the node (10) to data of legacy systems, such as operating data acquisition systems (6) or product data management systems (7).

6. System according to one of the preceding claims,
**characterised in that**
visualisation means (14) are provided to visualise the information provided by the infobroker, with information provisioning being provided in internet-compatible formats.

7. Method for structuring an information space of a product, containing dynamic data (4) and static data (5), with which method the information space is described using a product model (1) in the form of a hierarchical tree structure (3), with the product model (1) containing nodes (10) and node connections (11), with the node (10) representing a component of the product and with the connection (11) representing a link between the nodes (10) connected by the connection (11),
**characterised in that**
the node (10) contains meta-information, in particular a description of the node content, key words and contacts, with a provisioning component (2), known as the infobroker, being provided in the system to provide the dynamic (4) and static (5) information, with search rules being provided to implement provisioning, with acquisition means being provided to record a work situation (15) and with provisioning being provided as a function of the recorded work situation (15) and as a function of the meta-information.

8. Method according to claim 7,
**characterised in that**
paths uniquely identify the node (10) of the product model (1), with the paths being made up of the names of all components from the root of the hierarchical tree structure (3) to the node (10) itself.

9. Method according to claim 7 or 8,
**characterised in that**,
the product model (1) is described in an XML dialect, the meta-information is defined using the XML resource description format (RDF) and the connections (11) between the nodes (10) are described using the XML dialects XPointer and XLink.

10. Method according to one of claims 7 to 9,
**characterised in that**
first adapters (13) connect the content of the node (10) to dynamic data (4) of an automation facility.

11. Method according to one of claims 7 to 10,
**characterised in that**
second adapters (9, 12 connect the content of the node (10) to data of legacy systems, such as operating data acquisition systems (6) or product data management systems (7).

12. Method according to one of claims 7 to 11,
**characterised in that**
visualisation means (14) visualise the information provided by the infobroker and provide it in internet-compatible formats.

## Revendications

1. Système de structuration d'un espace d'informations d'un produit, l'espace d'informations contenant des données dynamiques (4) et des données statiques (5), avec un modèle de produit (1) sous la forme d'une structure arborescente hiérarchique (3) pour la description de l'espace d'informations, le modèle de produit (1) contenant des noeuds (10) et des liaisons (11) entre des noeuds, le noeud (10) étant prévu comme image d'un composant du produit et la liaison (11) étant prévue comme image d'une relation entre les noeuds (10) reliés par la liaison (11),
**caractérisé par le fait que** le noeud (10) contient des méta-informations, notamment une description du contenu de noeud, des mots-clés et des partenaires référants, un composant de mise à disposition (2) appelé Infobroker étant prévu dans le système pour la mise à disposition des informations dynamiques (4) et statiques (5), des règles de recherche étant prévues pour la réalisation de la mise à disposition, des moyens de détection étant prévus pour la détection d'une situation de travail (15) et la mise à disposition étant prévue en fonction de la situation de travail détectée (15) et en fonction des méta-informations.

2. Système selon la revendication 1,
**caractérisé par le fait que** des chemins sont prévus pour l'identification univoque du noeud (10) du modèle de produit (1), les chemins étant composés des noms de tous les composants à partir de la racine de la structure arborescente hiérarchique (3) jusqu'au noeud (10).

3. Système selon la revendication 1 ou 2,
**caractérisé par le fait que** le modèle de produit (1) est décrit dans un dialecte XML, que les méta-informations sont définies avec le XML Ressource Description Format (RDF) et que les liaisons (11) entre les noeuds (10) sont décrites avec les dialectes XML XPointer et XLink.

4. Système selon l'une des revendications précédentes,
**caractérisé par le fait que** des premiers adaptateurs (13) sont prévus pour la liaison du contenu du noeud (10) à des données dynamiques (4) d'un dispositif d'automatisation.

5. Système selon l'une des revendications précédentes,
**caractérisé par le fait que** des deuxièmes adaptateurs (9, 12) sont prévus pour la liaison du contenu du noeud (10) à des données de systèmes dits Legacy, tels que des systèmes de détection de données de fonctionnement (6) ou des systèmes de gestion de données de produit (7).

6. Système selon l'une des revendications précédentes,
**caractérisé par le fait que** des moyens de visualisation (14) sont prévus pour visualiser les informations mises à disposition par l'Infobroker, une mise à disposition des informations étant prévue dans des formats conformes à l'internet.

7. Procédé de structuration d'un espace d'informations d'un produit, l'espace d'informations contenant des données dynamiques (4) et des données statiques (5), l'espace d'informations étant décrit avec un modèle de produit (1) sous la forme d'une structure arborescente hiérarchique (3), le modèle de produit (1) contenant des noeuds (10) et des liaisons (11) entre des noeuds, le noeud (10) reproduisant un composant du produit et la liaison (11) reproduisant une relation entre les noeuds (10) reliés par la liaison (11),
**caractérisé par le fait que** le noeud (10) contient des méta-informations, notamment une description du contenu de noeud, des mots-clés et des partenaires référants, un composant de mise à disposition (2) appelé Infobroker étant prévu dans le système pour la mise à disposition des informations dynamiques (4) et statiques (5), des règles de recherche étant prévues pour la réalisation de la mise à disposition, des moyens de détection étant prévus pour la détection d'une situation de travail (15) et la mise à disposition étant prévue en fonction de la situation de travail détectée (15) et en fonction des méta-informations.

8. Procédé selon la revendication 7,
**caractérisé par le fait que** des chemins identifient sans équivoque le noeud (10) du modèle de produit (1), les chemins étant composés des noms de tous les composants à partir de la racine de la structure arborescente hiérarchique (3) jusqu'au noeud (10).

9. Procédé selon la revendication 7 ou 8,
**caractérisé par le fait que** le modèle de produit (1) est décrit dans un dialecte XML, que les méta-informations sont définies avec le XML Ressource Description Format (RDF) et que les liaisons (11) entre les noeuds (10) sont décrites avec les dialectes XML XPointer et XLink.

10. Procédé selon l'une des revendications 7 à 9,
**caractérisé par le fait que** des premiers adaptateurs (13) relient le contenu du noeud (10) à des données dynamiques (4) d'un dispositif d'automatisation.

11. Procédé selon l'une des revendications 7 à 10,
**caractérisé par le fait que** des deuxièmes adaptateurs (9, 12) relient le contenu du noeud (10) à des données de systèmes dits Legacy, tels que des systèmes de détection de données de fonctionnement (6) ou des systèmes de gestion de données de produit (7).

12. Procédé selon l'une des revendications 7 à 11,
**caractérisé par le fait que** des moyens de visualisation (14) visualisent les informations mises à disposition par l'Infobroker et les mettent à disposition dans des formats conformes à l'internet.
